# FASCICULE DE BREVET EUROPEEN

(11) **EP 0 496 658 B1**
(45) Date de publication et mention de la délivrance du brevet: **22.02.1995**
(21) Numéro de dépôt: 92400142.3
(22) Date de dépôt: 20.01.1992
(51) Int. Cl.: F16F 7/12, B64D 25/04

(54) **Dispositif d'absorption d'énergie, structure formant piètement pour siège d'appareil de transport aérien comportant un tel dispositif, et siège comportant une telle structure**
Energie-Dämpfer, so wie Stützstruktur für einen Luftfahrzeugsitz mit diesem Dämpfer und Sitz mit dieser Struktur
Energy absorber, structure forming part of the base for aircraft seats with such an absorber and seat with such a structure

(30) Priorité: 22.01.1991 FR 9100684
(43) Date de publication de la demande: 29.07.1992
(73) Titulaire: SICMA AERO SEAT - SOCIETE INDUSTRIELLE ET COMMERCIALE DE MATERIEL AERONAUTIQUE, F-75116 Paris (FR)
(72) Inventeur: Danawi, Marwan, F-44240 La Chapelle Sur Erdre (FR); Prott, Thierry, F-44300 Nantes (FR)
(74) Mandataire: Derambure, Christian

(56) Documents cités:
- EP-A- 0 286 471
- DE-U- 8 526 591
- FR-A- 2 004 769
- GB-A- 1 286 439
- GB-A- 2 228 548
- GB-A- 2 232 584
- US-A- 4 440 441
- US-A- 4 911 381

## Description

L'invention concerne une structure formant piètement de siège d'appareil de transport aérien notamment pour siège de passager d'avion de ligne- comprenant un dispositif d'absorption d'énergie.

On connaît déjà des brevets européen EP-A-0 286 471 et américain US-A-4 861 103 une structure à dispositif d'absorption d'énergie résistant à des efforts dynamiques formant piètement pour siège d'appareil de transport aérien. Cette structure, possède un dispositif d'absorption d'énergie globalement allongé et interposé entre le pied avant et le pied arrière d'un siège d'appareil de transport aérien, les extrémités du dispositif d'absorption d'énergie étant associées respectivement à l'un des pieds de façon que lorsque la structure se déforme lors d'un choc, le dispositif subisse au moins un effort de compression dans la direction donnée par une droite qui passe par les deux extrémités du dispositif d'absorption d'énergie à la structure. Dans cette structure, il est prévu notamment dans un mode de réalisation que le dispositif d'absorption d'énergie soit du type à compression, par exemple constitué de deux organes coulissant l'un par rapport à l'autre. Par ailleurs, dans cette structure, le pied arrière est en forme de console dont la convexité est orientée vers l'avant, et les articulations de la structure au siège et au sol sont telles que ce pied arrière en forme de console participe à l'absorption d'énergie lors d'un choc tel que celui qui serait dû à l'écrasement de l'appareil au sol.

L'invention vise à perfectionner, la structure formant piètement, le siège décrit dans la demande de brevet européen 0 286 471.

L'invention a pour objet de proposer une structure formant piètement pour siège d'appareil de transport aérien. La structure comprend un dispositif d'absorption d'énergie qui lui est parfaitement adapté. En particulier, l'invention a pour objet de proposer une structure et un siège selon l'invention permettant de satisfaire aux tests dynamiques proposés par la FAA et décrits dans le document américain NPRM 86-11 (Federal Register volume 51 n° 137/17 Juillet 1986, page 25982 à 25989).

Plus particulièrement, l'invention a pour objet de proposer une telle structure dont le comportement en déformation sous l'effet d'un choc doit pouvoir être préalablement déterminé avec précision et fiabilité. Plus précisément, l'invention a pour objet de proposer une structure comprenant un dispositif d'absorption d'énergie dont les caractéristiques peuvent être facilement déterminées en fonction du seuil souhaité de décélération à partir duquel la déformation et l'absorption d'énergie sont souhaitées.

L'invention a également pour objet de proposer une structure de piètement dont les caractéristiques d'absorption d'énergie lors d'un choc sont essentiellement fonction des conditions dynamiques de ce choc, et qui réalisent une absorption d'énergie avec peu de déformation de la structure et de l'assiette du siège.

L'invention a également pour objet de proposer une telle structure qui conservent des caractéristiques d'absorption d'énergie sensiblement constantes tout au long de sa déformation sous l'effet du choc.

L'invention a enfin pour objet de proposer une structure de piètement de siège dans laquelle l'effet du dispositif d'absorption d'énergie se combine avantageusement à celui du pied arrière en forme de console à convexité orientée vers l'avant.

Pour ce faire, l'invention propose une structure conforme à la revendication 1.

Des modifications de l'invention sont décrits dans les revendications 2 à 26.

L'invention concerne aussi un siège d'appareil de transport aérien conforme à la revendication 27.

Ainsi, l'invention permet de perfectionner avantageusement la structure divulguée par la demande de brevet européen 0 286 471. On pourra remarquer par exemple que le mode de déformation du dispositif d'absorption d'énergie selon l'invention lors de l'absorption d'énergie n'entrave pas la déformation du pied arrière en forme de console et permet donc l'absorption simultanée de l'énergie à la fois par le pied arrière en forme de console et par le dispositif d'absorption lui-même.

D'autres avantages et caractéristiques de l'invention apparaîtront à la lecture de la description suivante qui se réfère aux figures annexées dans lesquelles :
- la figure 1 est une vue en perspective d'un dispositif d'absorption d'énergie selon l'invention
- la figure 2 est une vue de profil d'une structure formant piètement selon l'invention
- la figure 3 est un diagramme illustrant la courbe représentative de la valeur de l'effort absorbé en fonction de la déformation de la structure selon l'invention avec un dispositif d'absorption d'énergie selon l'invention.

L'invention concerne une structure 4 formant piètement pour siège d'appareil de transport aérien comprenant un dispositif d'absorption d'énergie interposé entre le pied avant 2 et le pied arrière 3 de la structure 4 formant piètement de siège d'appareil de transport aérien de façon que lorsque la structure 4 se déforme lors d'un choc tel que celui dû à l'écrasement de l'appareil au sol, le dispositif 1 subisse au moins un effort de compression longitudinal. Selon l'invention, le dispositif d'absorption d'énergie est constitué d'un élément 1 d'un seul tenant, globalement allongé, dont chaque extrémité 5, 6 est associée respectivement à l'un des pieds 2, 3, et qui comporte au moins une portion 12 dont la forme est prédéterminée de telle sorte que cet élément 1 subit une déformation plastique générale structurelle selon un mode de déformation imposé. Et l'élément 1 comporte au moins une portion 7 disposée en opposition par rapport à la déformation plastique générale structurelle propre de l'élément 1, cette portion 7 subissant une déformation plastique propre en flexion par flambage différente ou indépendante de la déformation plastique générale de l'élément 1 à partir d'une valeur prédéterminée de l'effort de compression longitudinal. Selon l'invention, l'élément 1 est disposé pour subir une déformation plastique générale en flexion, notamment par flambage.

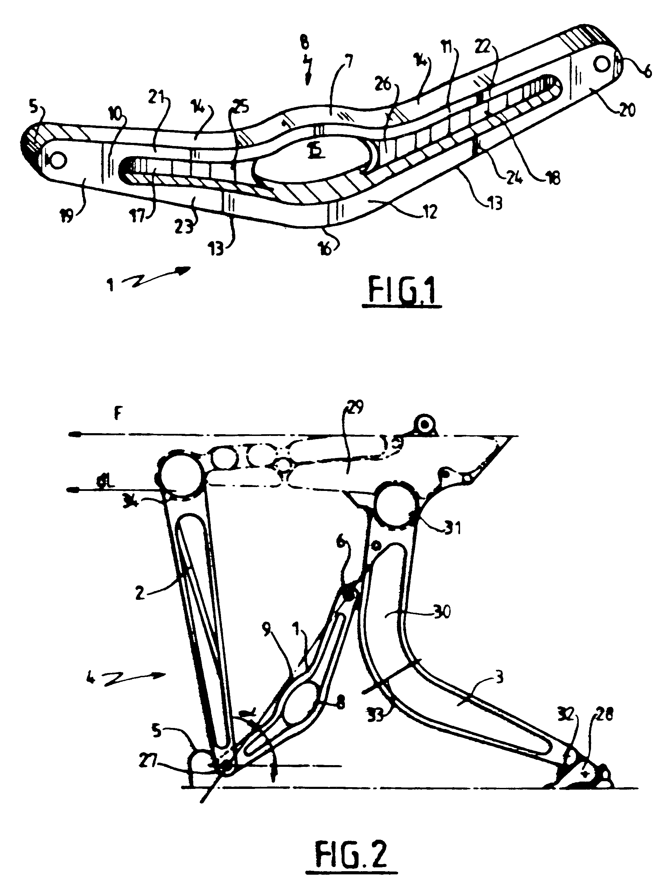

Selon l'invention, l'élément 1 comporte une zone localisée 8 écartée, avant déformation, de l'alignement des deux extrémités 5, 6. La zone localisée 8 est décalée latéralement à distance de la droite 9 représentée en pointillés mixtes sur la figure 2 passant par les deux extrémités 5, 6 de l'élément 1. Les caractéristiques mécaniques et le dimensionnement de l'élément 1 dans cette zone localisée 8 sont tels que la déformation plastique générale de l'élément 1 est concentrée dans cette zone localisée. En particulier, la zone localisée 8 est moins résistante que le reste de l'élément 1 et est prédéformée. Et l'élément 1 selon l'invention comporte des moyens 7, 12 d'absorption d'énergie par déformation plastique structurelle qui sont actifs lors de la déformation de l'élément 1 en flexion dans la zone localisée 8 engendrée par l'effort de compression longitudinal. Ces moyens 7, 12 d'absorption d'énergie sont constitués de l'élément 1 lui-même et plus particulièrement de la zone localisée 8 déformable plastiquement en flexion. La zone localisée 8 constitue donc pour l'élément 1 un axe de pivotement propre en flexion. L'élément 1 lors de sa déformation plastique générale est donc plié autour d'un axe de pivotement ou de pliage passant par la zone localisée 8. Selon l'invention, la zone localisée 8 est au moins sensiblement médiane de l'élément 1. Et l'élément 1 est dimensionné de façon à ne pas subir de déformation en dehors de cette zone localisée 8.

L'élément 1 est ainsi constitué de deux portions de bras 10, 11 se rejoignant dans la zone localisée 8. L'élément 1 est en forme générale de croissant, globalement courbe ou angulaire, la zone localisée 8 étant celle de plus grande courbure globale. Les deux portions de bras 10, 11 se rejoignant dans la zone localisée 8 sont similaires, au moins sensiblement rectilignes ou légèrement courbes et leur direction longitudinale passant par les extrémités 5, 6 de l'élément 1 forme un angle obtus. Les portions de bras 10, 11 s'étendant à partir de la zone localisée 8 vers les extrémités 5, 6 sont plus résistantes en flexion que les parties constitutives de cette zone localisée 8. Ainsi, les moyens 7, 12 d'absorption d'énergie sont au moins pour partie constitués d'une portion 12 moins résistante de la zone localisée 8 de l'élément 1, cette portion 12 moins résistante se déformant plastiquement en flexion en absorbant l'énergie, la déformation plastique en flexion de cette portion 12 moins résistante correspondant à la déformation générale de l'élément 1 en flexion. Ainsi, les deux portions de bras 10, 11 s'étendant à partir de la zone localisée 8 fléchissent l'une par rapport à l'autre lors de la déformation plastique générale de l'élément 1 par la déformation plastique en flexion de la portion 12 moins résistante de cette zone localisée 8. La déformation plastique en flexion de l'élément 1 se fait par diminution de la valeur de l'angle formé par les deux portions de bras 10, 11 et par rapprochement des extrémités 5, 6 l'une de l'autre. La portion moins résistante de la zone localisée 8 est la prolongation de la face convexe 13 de chacune des portions 10, 11 de bras de l'élément 1. Ainsi, la portion 12 moins résistante est constituée d'une portion de bras courbe à convexité orientée dans le même sens que la convexité générale de l'élément 1 et prolongeant la face convexe 13 continûment des deux portions de bras 10, 11 qu'elle relie.

Les moyens 7, 12 d'absorption d'énergie sont au moins pour partie constitués par ailleurs d'une portion 7 en opposition disposée pour s'opposer à la déformation générale en flexion de l'élément 1 et à la déformation en flexion de la portion 12 moins résistante. Ainsi, la portion 7 subissant une déformation plastique propre en flexion par flambage mentionnée ci-dessus est constituée de ladite portion 7 en opposition. Cette portion 7 en opposition est constituée d'une entretoise 7 s'opposant à la déformation générale en flexion de l'élément 1 et à la déformation en flexion de la portion 12 moins résistante, et cette portion 7 en opposition est dimensionnée pour subir une déformation par flambage à partir d'une valeur prédéterminée de l'effort de compression subi par l'élément 1. Ainsi, la fonction de cette portion 7 en opposition est de déterminer avec une plus grande précision le seuil de déclenchement de la déformation plastique en flexion par flambage du dispositif 1 selon l'invention. En effet, lorsque cette portion 7 en opposition subit une déformation par flambage, l'effort de compression dépassant la valeur prédéterminée pour ce faire, l'élément 1 se trouve privé de l'entretoise que constituait cette portion 7 en opposition et est donc brusquement fragilisé. Dès lors, la portion 12 moins résistante subit immédiatement une déformation en flexion par flambage générale de l'élément 1 dans le domaine plastique.

Ainsi, la zone localisée 8 est constituée de deux portions 7, 12 de bras courbes à convexités opposées l'une par rapport à l'autre, séparées par un espace central 15, les courbures de ces portions 7, 12 correspondant aux et déterminant les déformations en flexion qu'elles subissent lors du choc, c'est-à-dire que les courbures de ces portions constituent des prédéformations permettant d'imposer le mode de déformation par flambage subi par ces portions. La portions 12 moins résistante de forme prédéterminée constitue une prédéformation de l'élément 1.

La portion 7 en opposition est disposée du côté de la face globalement concave 14 de l'élément 1 et des portions 10, 11 de bras qui se rejoignent dans la zone localisée 8 et qu'elles relient l'un à l'autre. Ainsi, les deux portions de bras 10, 11 sont reliées l'une à l'autre d'une part par la portion 12 moins résistante du côté globalement convexe de l'élément 1, d'autre part par la portion en opposition 7 du côté globalement concave de l'élément 1. Mais la portion 7 en opposition a sa convexité opposée à celle de l'élément 1 et forme donc un renflement interne du côté concave (figure 1). La portion 7 forme ainsi un arc-boutant pour l'élément 1 qui est prédéformé.

Selon l'invention, l'une 12 des portions 7, 12 de bras courbes de la zone localisée 8 constitue le sommet 16 de plus grande courbure de la face convexe 13 de l'élément 1 et a donc sa convexité orientée dans le même sens que celle de l'élément 1. Et l'autre 7 portion de bras courbe de la zone localisée 8 forme pour partie la face 14 globalement concave de l'élément 1 mais a sa convexité orientée dans l'autre sens de façon à former entretoise s'opposant à la déformation générale en flexion de l'élément 1. Lors de la déformation plastique subie par l'élément 1 lors d'un choc, les deux portions 7, 12 formant la zone localisée 8 de déformation et les moyens d'absorption d'énergie se déforment en flexion dans le domaine plastique, la portion 7 en opposition subissant un flambage. La déformation en flexion de l'élément 1 augmente sa courbure au niveau de la zone localisée 8. Subséquemment, les courbures des deux portions 7, 12 constituant la zone localisée 8 sont augmentées, ces portions 7, 12 ayant par ailleurs tendance à s'écarter l'une de l'autre, l'espace 15 ayant sa largeur qui augmente.

Chaque portion 10, 11 de bras s'étendant entre une extrémité 5, 6 de l'élément 1 et la zone localisée 8 comporte un évidement longitudinal 17, 18 s'étendant entre les faces concave 13 et convexe 14, c'est-à-dire le long des faces latérales 19, 20 de ces portions 10, 11 de bras. Ces évidements permettent d'alléger le poids total de l'élément 1. Et la résistance de l'élément 1 est peu modifiée par la présence de ces évidements 17, 18. De tels évidements 17, 18 peuvent être prévus de chaque côté, c'est-à-dire sur chacune des faces latérales 19, 20 de chacune des portions 10, 11 de bras. Ainsi, chaque portion 10, 11 de bras est constituée d'une bande 21, 22 s'étendant du côté concave 13 de l'élément 1 longitudinalement, d'une bande 23, 24 s'étendant du côté convexe de l'élément 1 longitudinalement, et d'une nervure 25, 26 centrale s'étendant longitudinalement entre les deux bandes 21, 23, 22, 24, et entre chacune des extrémités 5, 6 qui relient les deux bandes 21, 23, 22, 24 l'une à l'autre, et l'espace 15 central de la zone localisée 8. Les portions 7, 12 de la zone localisée 8 sont constituées de prolongement de ces bandes 21, 22, 23, 24 et ont au moins sensiblement la même épaisseur et la même largeur que ces bandes.

L'élément 1 selon l'invention est constitué d'une matière susceptible de subir une déformation plastique. De préférence, l'élément 1 est constitué de façon homogène en une seule matière, seule la géométrie et les dimensions de la zone localisée 8 et des portions 10, 11 de bras déterminant le mode de déformation en flexion plastique de l'élément 1. En variante, on peut prévoir que la zone localisée 8 soit constituée d'une matière plastique de caractéristiques différentes notamment moins résistantesque les portions 10, 11 de bras s'étendant entre les extrémités 5, 6 et cette zone localisée 8.

Par exemple, l'élément 1 est constitué en alliage d'aluminium qui est une matière plastique dont les caractéristiques de plasticité permettent la réalisation aisée d'un dispositif d'absorption d'énergie de faible poids et de faible encombrement.

La structure est représentée schématiquement à la figure 2. Une telle structure est associée à la structure fixe de l'appareil notamment au sol- par au moins un ancrage avant 27 d'un pied avant 2 et par au moins un ancrage arrière 28 d'un pied arrière 3, les pieds avant 2 et arrière 3 étant associés à l'ossature 29 du siège, le pied avant 2 s'étendant, en position normale, au moins sensiblement verticalement à partir de son ancrage avant inférieur 2 notamment perpendiculairement au sol de l'appareil, les pieds avant 2 et arrière 3 étant articulés par leurs extrémités supérieures respectives à l'ossature 29 du siège de façon à pouvoir pivoter autour d'axes de pivotement horizontaux et transversaux, la structure comportant un dispositif d'absorption d'énergie 1 associé à la partie supérieure 30 du pied arrière 3 mais à distance de l'articulation arrière supérieure 31 et au voisinage de ou à l'ancrage avant inférieur 27. La structure comporte des moyens 32 limitant ou empêchant le pivotement vers l'avant du pied arrière 3 autour de son ancrage arrière 28 à la structure fixe de l'appareil.

Le pied arrière 3 est en forme de console dont la convexité est orientée vers l'avant de sorte que ce pied arrière 3 subit, lorsque la structure 4 se déforme, une déformation en flexion vers l'avant dont l'axe de rotation en flexion théorique ou imposé est éloigné de l'ancrage arrière 28 et sensiblement à la verticale de la position initiale normale de l'axe d'articulation du pied arrière 3 à l'ossature 29 du siège. Le pied arrière 3 est constitué d'une façon telle que l'axe de rotation en flexion théorique ou imposé est écarté vers le haut de la structure fixe de l'appareil. Selon l'invention, l'ancrage avant 27 comporte une articulation permettant au pied avant 2 de pivoter vers l'avant à partir de sa position normale autour d'un axe de pivotement horizontal transversal de cet ancrage avant 27.

Le dispositif d'absorption d'énergie 1 est associé à la partie supérieure 30 du pied arrière 3 au-dessus de la zone 33 de courbure maximale du pied arrière 3. Le dispositif d'absorption d'énergie 1 est associé articulé au pied arrière 3 de façon à pouvoir pivoter autour d'un axe de pivotement horizontal transversal. Par contre, le dispositif d'absorption d'énergie 1 est associé rigidement au voisinage de ou à l'ancrage avant 27 sans possibilité de pivotement autour d'un axe horizontal transversal. Les deux extrémités 5, 6 d'association du dispositif d'absorption d'énergie 1 à la structure 4 définissent une direction orientée d'une façon telle que les efforts projetés sur cette direction résultant d'une décélération longitudinale de 16 g, le siège étant horizontal et d'une décélération verticale de 14 g le siège étant incliné vers le bas et vers l'avant de 30°, sont sensiblement les mêmes, notamment une direction formant un angle α avec l'horizontal de l'ordre de 37°.

Le pied arrière 3 est rigide et dimensionné notamment en épaisseur-, d'une façon telle qu'il reste quasi immobile et indéformable dans des conditions normales d'utilisation mais se déforme plastiquement notamment en flexion dans le sens d'une diminution de sa courbure- lorsque la décélération subie par le siège et son (ou ses) passager(s) dépasse une valeur déterminée correspondant à une situation d'accident et sollicite la structure 4 en déformation, de sorte que cette déformation de la structure 4 n'a lieu qu'avec dissipation d'énergie de déformation élastique puis plastique du pied arrière 3. Le pied arrière 3 est dimensionné de façon à commencer à se déformer plastiquement notamment en flexion dans le sens d'une diminution de courbure- à partir d'une décélération subie par le siège et son passager qui entraîne une dissipation d'énergie dans le dispositif d'absorption d'énergie 1 c'est-à-dire un effort de compression engendrant le flambage de la portion 7 en opposition de la zone localisée 8. Et le pied avant 2 et l'ossature 29 notamment les longerons et/ou les poutres transversales auxquels la structure 4 est associée-, sont dimensionnés pour rester rigides ou seulement élastiquement déformables dans la plage des décélérations qui n'entraînent pas de rupture mécanique dans la structure 4.

Le pied arrière 3 et le dispositif d'absorption d'énergie 1 sont dimensionnés pour se déformer à partir d'une décélération correspondant à une décélération longitudinale (selon l'axe de la force F sur la figure 2) de l'ordre de 15 g, notamment comprise entre 14 g et 16 g.

Comme on le voit sur la figure 2, dans une structure 4 selon l'invention, le dispositif d'absorption d'énergie 1 selon l'invention est disposé de telle façon que sa convexité globale est orientée vers le bas et vers l'arrière, la zone localisée 8 étant décalée vers le bas et vers l'arrière par rapport à la droite 9 reliant les extrémités 5, 6. Ainsi, les convexités globales du dispositif d'absorption d'énergie 1 et du pied arrière 3 sont opposées. Lors de la déformation plastique résultant d'un choc, la courbure du pied arrière 3 augmente et la courbure du dispositif d'absorption d'énergie 1 diminue. Ainsi, l'extrémité supérieure 6 du dispositif d'absorption d'énergie 1 reliée au pied arrière 3 a tendance à baisser du fait de l'augmentation de la courbure de ce dispositif d'absorption d'énergie 1, la zone localisée 8 ayant également elle-même tendance à baisser, mais l'extrémité supérieure du pied 3 a elle tendance à monter du fait de l'ouverture de la courbure du pied 3. Ces deux effets se contredisent et le résultat est une déformation qui se fait avec sensiblement une conservation de l'assiette de la partie supérieure 30 du pied arrière 3, donc du siège.

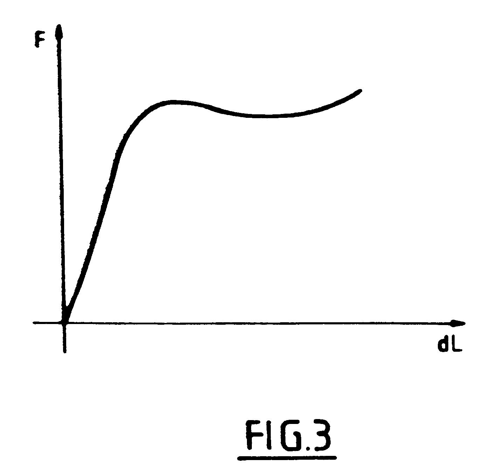

Par ailleurs, la courbe représentée sur la figure 3 illustre les variations de l'effort F horizontal absorbé lors de la déformation de la structure 4 en fonction du déplacement dL de l'extrémité supérieure 34 du pied avant 2 dans le sens horizontal (dans les directions et les sens représentés sur la figure 2). Comme on le voit, l'effort absorbé reste sensiblement constant sur une large plage de variation du déplacement dL. Dès lors, dès que le domaine plastique de déformation est atteint, une grande énergie est dissipée puisque l'effort absorbé ne diminue pas en fonction du déplacement contrairement à ce qui est généralement le cas dans les majorités des dispositifs d'absorption d'énergie et dans les structures soumises au flambage.

L'invention concerne enfin un siège d'appareil de transport aérien notamment un siège de passager d'avion de ligne- caractérisé en ce qu'il comporte une piètement formé d'une structure 4 selon l'invention.

## Revendications

1. Structure (4) formant piètement pour siège d'appareil de transport aérien comprenant un dispositif d'absorption d'énergie (1) globalement allongé et interposé entre le pied avant (2) et le pied arrière (3) d'un siège d'appareil de transport aérien, les extrémités (5, 6) du dispositif d'absorption d'énergie étant associées respectivement à l'un des pieds (2,3) de façon que lorsque la structure (4) se déforme lors d'un choc, le dispositif (1) subisse au moins un effort de compression dans la direction donnée par une droite (9) qui passe par les deux extrémités (5, 6) du dispositif d'absorption d'énergie à la structure (4) caractérisée en ce que le dernier est constitué d'un élément (1) d'un seul tenant qui comporte au moins une portion (12) dont la forme est prédéterminée de telle sorte que cet élément (1) subit une déformation plastique générale structurelle propre selon un mode de déformation imposé, et en ce que l'élément comporte au moins une portion (7) disposée en opposition par rapport à ladite portion (12) subissant la déformation plastique générale structurelle propre de l'élément (1), cette portion (7) en opposition subissant une déformation plastique propre en flexion par flambage à partir d'une valeur prédéterminée de l'effort de compression dans la direction de la droite (9).

2. Structure selon la revendication 1 caractérisée en ce que l'élément (1) est disposé pour subir une déformation plastique générale en flexion.

3. Structure selon la revendication 2 caractérisée en ce que l'élément (1) est disposé pour subir une déformation plastique générale en flexion par flambage.

4. Structure selon l'une quelconque des revendications 1 à 4 caractérisée en ce que l'élément (1) comporte une zone localisée (8) écartée avant déformation de l'alignement de ses deux extrémités (5, 6) en ce que les caractéristiques mécaniques et le dimensionnement de cette zone localisée (8) sont tels que la déformation plastique générale de l'élément (1) est concentrée dans cette zone localisée (8), et en ce qu'il comporte lesdites portions (7, 12) d'absorption d'énergie par déformation plastique qui sont actifs lors de la déformation de l'élément (1) en flexion dans la zone localisée (8) engendrée par l'effort de compression dans la direction de ladite droite (9).

5. Structure selon la revendication 4 caractérisée en ce que les portions (7, 12) d'absorption d'énergie sont constitués de la zone localisée (8) déformable plastiquement en flexion.

6. Structure selon l'une quelconque des revendications 4 et 5 caractérisée en ce que la zone localisée (8) est au moins sensiblement médiane.

7. Structure selon l'une quelconque des revendications 4 à 6 caractérisée en ce que l'élément (1) est dimensionné de façon à ne pas subir de déformation en dehors de la zone localisée (8).

8. Structure selon l'une quelconque des revendications 4 à 7 caractérisée en ce que la portion (12) est moins résistante de la zone localisée (8) de l'élément (1), cette portion (12) moins résistante se déformant plastiquement en flexion en absorbant l'énergie, la déformation plastique en flexion de cette portion (12) moins résistante correspondant à la déformation générale de l'élément (1) en flexion.

9. Structure selon l'une quelconque des revendications 4 à 8 caractérisée en ce que la portion (7) en opposition est disposée pour s'opposer à la déformation générale en flexion de l'élément (1) et à la déformation en flexion de la portion (12) moins résistante.

10. Structure selon la revendication 9 caractérisée en ce que la portion (7) en opposition est constituée d'une entretoise (7) s'opposant à la déformation générale en flexion de l'élément (1) et à la déformation en flexion de la portion (12) moins résistante.

11. Structure selon l'une quelconque des revendications 1 à 10 caractérisée en ce que l'élément (1) est en forme générale de croissant.

12. Structure selon l'une quelconque des revendications 1 à 11 caractérisée en ce que l'élément (1) est globalement courbe ou angulaire, la zone localisée (8) étant celle de plus grande courbure globale.

13. Structure selon l'une quelconque des revendications 4 à 12 caractérisée en ce que la zone localisée (8) est constituée de deux portions (7, 12) de bras courbes à convexités opposées, séparées par un espace (15), les courbures de ces portions (7, 12) correspondant aux et déterminant les déformations en flexion qu'elles subissent lors du choc.

14. Structure selon l'une quelconque des revendications 4 à 13 caractérisée en ce que l'une (12) des portions (7, 12) de bras courbes de la zone localisée (8) constitue le sommet (16) de plus grande courbure de la face convexe (13) de l'élément (1) et a donc sa convexité orientée dans le même sens que celle de l'élément (1) et en ce que l'autre (7) portion de bras courbe forme pour partie la face (14) globalement concave de l'élément (1) mais a sa convexité orientée dans l'autre sens de façon à former entretoise s'opposant à la déformation générale en flexion de l'élément (1).

15. Structure selon l'une quelconque des revendications 1 à 14 notamment pour siège de passager d'avion de ligne-, associée ancrée à la structure fixe de l'appareil notamment au sol- par au moins un ancrage avant (27) du pied avant (2) et par au moins un ancrage arrière (28) du pied arrière (3), les pieds avant (2) et arrière (3) étant associés à l'ossature (29) du siège, le pied avant (2) s'étendant, en position normale, au moins sensiblement verticalement à partir de son ancrage avant inférieur (2) notamment perpendiculairement au sol de l'appareil, les pieds avant (2) et arrière (3) étant articulés par leurs extrémités supérieures respectives à l'ossature (29) du siège de façon à pouvoir pivoter autour d'axes de pivotement horizontaux et transversaux, la structure comportant le dispositif d'absorption d'énergie (1) associé à la partie supérieure (30) du pied arrière (3) mais à distance de l'articulation arrière supérieure (31) et au voisinage de ou à l'ancrage avant inférieur, et la structure (4) comportant des moyens (32) limitant ou empêchant le pivotement vers l'avant du pied arrière (3) autour de son ancrage arrière (28) à la structure fixe de l'appareil.

16. Structure selon la revendication 15, caractérisée en combinaison en ce que le pied arrière (3) est en forme de console dont la convexité est orientée vers l'avant de sorte que le pied arrière (3) subit, lorsque la structure (4) se déforme, une déformation en flexion vers l'avant dont l'axe de rotation en flexion théorique ou imposé est éloigné de l'ancrage arrière (28) et sensiblement à la verticale de la position initiale normale de l'axe d'articulation du pied arrière (3) à l'ossature (29) du siège.

17. Structure selon la revendication 16 caractérisée en combinaison en ce que le pied arrière (3) est constitué d'une façon telle que l'axe de rotation en flexion théorique ou imposé est écarté vers le haut de la structure fixe de l'appareil.

18. Structure selon l'une quelconque des revendications 15 à 17 caractérisée en combinaison en ce que l'ancrage avant (27) comporte une articulation permettant au pied avant (2) de pivoter vers l'avant à partir de sa position normale autour d'un axe de pivotement horizontal transversal de cet ancrage avant (27).

19. Structure selon l'une quelconque des revendications 16 à 18 caractérisée en combinaison en ce que le dispositif d'absorption d'énergie (1) est associé à la partie supérieure (30) du pied arrière (3) au-dessus de la zone (33) de courbure maximale du pied arrière (3).

20. Structure selon l'une quelconque des revendications 15 à 19 caractérisée en combinaison en ce que le dispositif d'absorption d'énergie (1) est associé articulé au pied arrière (3) de façon à pouvoir pivoter autour d'un axe de pivotement horizontal transversal.

21. Structure selon l'une quelconque des revendications 15 à 20 caractérisée en combinaison en ce que le dispositif d'absorption d'énergie (1) est associé rigidement au voisinage de ou à l'ancrage avant (27) sans possibilité de pivotement autour d'un axe horizontal transversal.

22. Structure selon l'une quelconque des revendications 15 à 21 caractérisée en combinaison en ce que les deux extrémités d'association (5, 6) du dispositif d'absorption d'énergie (1) à la structure (4) définissent une direction orientée d'une façon telle que les efforts projetés sur cette direction résultant d'une décélération longitudinale de 16 g le siège étant horizontal et d'une décélération verticale de 14 g le siège étant incliné vers le bas et vers l'avant de 30°, sont sensiblement les mêmes, notamment une direction formant un angle α avec l'horizontal de l'ordre de 37°.

23. Structure selon l'une quelconque des revendications 15 à 22 caractérisée en combinaison en ce que le pied arrière (3) est rigide et dimensionné notamment en épaisseur-, d'une façon telle qu'il reste quasi immobile et indéformable dans des conditions normales d'utilisation mais se déforme plastiquement notamment en flexion dans le sens d'une diminution de sa courbure- lorsque la décélération subie par la siège et son (ou ses) passager(s) dépasse une valeur déterminée correspondant à une situation d'accident et sollicite la structure (4) en déformation, de sorte que cette déformation de la structure (4) n'a lieu qu'avec dissipation d'énergie de déformation élastique puis plastique du pied arrière (3).

24. Structure selon la revendication 23 caractérisée en combinaison en ce que le pied arrière (3) est dimensionné de façon à commencer à se déformer plastiquement notamment en flexion dans le sens d'une diminution de courbure- à partir d'une décélération subie par le siège et son passager qui entraîne une dissipation d'énergie dans le dispositif d'absorption d'énergie (1), et en ce que le pied avant (2) et l'ossature (29) notamment les longerons et/ou les poutres transversales auxquels la structure (4) est associée-, sont dimensionnés pour rester rigides ou seulement élastiquement déformables dans la plage des décélérations qui n'entraînent pas de rupture mécanique dans la structure (4).

25. Structure selon la revendication 24 caractérisée en combinaison en ce que le pied arrière (3) et le dispositif d'absorption d'énergie (1) sont dimensionnés pour se déformer à partir d'une décélération correspondant à une décélération longitudinale de l'ordre de 15 g, notamment 14 g et 16 g.

26. Structure selon l'une quelconque des revendications 15 à 25 caractérisée en ce que le dispositif d'absorption d'énergie (1) a sa convexité orientée vers le bas et vers l'arrière.

27. Siège d'appareil de transport aérien notamment siège de passager d'avion de ligne-, caractérisé en ce qu'il comporte un piètement formé d'une structure (4) selon l'une quelconque des revendications 15 à 26.

## Claims

1. Structure forming an under frame for the seat of an air transport device including an energy absorption device (1) fully elongated and inserted between the front foot (2) and rear foot (3) seat of an air transport device, the ends (5, 6) of the energy absorption device being respectively associated with one of the feet (2, 3) so that, when the structure (4) warps during an impact, the device (1) undergoes at least one compression force in the direction given by a straight line (9) which passes through the two ends (5, 6) of the energy absorption device to the structure (4), wherein the latter is formed of an element (1) made up of a single piece which comprises at least one portion (12) whose shape is predetermined so that this element (1) undergoes a particular general structural plastic warping according to an imposed mode of warping, and wherein the element comprises at least one portion (7) disposed in opposition with respect to said portion (12) undergoing a particular general structural bending strain of the element (1), this portion (7) undergoing in opposition a particular plastic bending strain by buckling from a predetermined value of the compression force in the direction of the straight line (9).

2. Structure according to claim 1, wherein the element (1) is disposed so as to undergo a general plastic bending strain.

3. Structure according to claim 2, wherein the element (1) is disposed so as to undergo a general bending plastic strain by buckling.

4. Structure according to any one of claims 1 to 4, wherein the element (1) comprises a spaced localized zone (8) before deformation of the alignment of its two ends (5, 6), wherein the mechanical characteristics and dimensioning of this localized zone (8) are such that the general plastic warping of the element (1) is concentrated in this localized zone (8), and wherein it comprises said portions (7, 12) for absorbing energy by means of plastic warping, said portions being active when the element (1) warps by bending in the localized zone (8) generated by the compression force in the direction of said straight line (9).

5. Structure according to claim 4, wherein the energy absorption portions (7, 12) are formed from the plastically bending strain zone (8).

6. Structure according to claim 4 or 5, wherein the localized zone is at least approximately median.

7. Structure according to any one of claims 4 to 6, wherein the element (1) is dimensioned so as to not undergo any warping outside the localized zone (8).

8. Structure according to any one of claims 4 to 7, wherein the portion (12) is less resistant in the localized zone of the element (1), this less resistant portion (12) plastically warping on bending by absorbing the energy, the plastic bending strain of this less resistant portion (12) corresponding to the general bend strain of the element (1).

9. Structure according to any one of claims 4 to 8, wherein the portion (7) in opposition is disposed so as to oppose the general bending strain of the element (1) and the bending strain of the less resistant portion (12).

10. Structure according to claim 9, wherein the portion (7) in opposition is formed of a brace (7) opposing the general bending strain of the element (1) and the bending strain of the less resistant portion (12).

11. Structure according to any one of claims 1 to 10, wherein the element (1) has a general crescent shape.

12. Structure according to any one of claims 1 to 11, wherein the element (1) is generally curved or angular, the localized zone (8) being the one with the largest overall curve.

13. Structure according to any one of claims 4 to 12, wherein the localized zone (8) is formed of two portions (7, 12) of bent arms with opposing convexities separated by a space (15), the bends of these portions (7, 12) corresponding to and determining the bending strains they undergo at the time of impact.

14. Structure according to any one of claims 4 to 13, wherein one (12) of the bent arm portions (7, 12) of the localized zone (8) constitutes the top (16) of the largest bend of the convex face (13) of the element (1) and thus has its convexity orientated in the same direction as that of the element (1) and wherein the other bent arm portion (7) partly forms the generally concave face (14) of the element (1) but with its convexity orientated in the other direction so as to form a brace opposing the general bending strain of the element (1).

15. Structure according to any one of claims 1 to 14 for in particular a airline passenger seat and associated and anchored to the fixed structure of the device, especially on the ground, by at least one front anchorage point (27) of the front foot (2) and by at least one rear anchorage point (28) of the rear foot (3), the front (2) and rear (3) feet being associated with the frame (29) of the seat, the front foot (2) extending in a normal position at least approximately vertically from its lower front anchorage point (2), especially perpendicular on the ground from the device, the front (2) and rear (3) feet being joined via their respective upper ends to the frame (29) of the seat so as to be able to pivot around horizontal and transverse swivel pins, the structure comprising the energy absorption device (1) associated with the upper portion (30) of the rear foot (3) but distanced from the upper rear joint (31) and close to or at the lower front anchorage point, and the structure (4) comprising means (32) limiting or preventing pivoting towards the front of the rear foot (3) around its rear anchorage point (28) at the fixed structure of the device.

16. Structure according to claim 15, wherein in combination the rear foot (3) is in the shape of a console whose convexity is orientated towards the front so that, when the structure (4) warps, the rear foot (3) undergoes bending strain towards the front whose spin axis on theoretical or imposed bending is distanced from the rear anchorage point (28) and approximately vertically from the the initial normal position of the hinge pin of the rear foot (3) at the frame (29) of the seat.

17. Structure according to claim 15, wherein in combination the rear foot (3) is constituted in such a way that the spin axis on theoretical or imposed bending is distanced towards the top of the fixed structure of the device.

18. Structure according to any one of claims 15 to 17, wherein in combination the front anchorage point (27) comprises a joint enabling the front foot (2) to pivot towards the front from its normal position around a transverse horizontal swivel pin of this front anchorage point (27).

19. Structure according to any one of claims 16 to 18, wherein in combination the energy absorption device (1) is associated with the upper portion (30) of the rear foot (3) above the maximum bending zone (33) of the rear foot (3).

20. Structure according to any one of claims 15 to 19, wherein in combination the energy absorption device (1) is associated joined to the rear foot (3) so as to be able to pivot around a transverse horizontal swivel pin.

21. Structure according to any one of claims 15 to 20, wherein in combination the energy absorption device (1) is rigidly associated close to or with the front anchorage point (27) without any possibility of pivoting around a transverse horizontal axis.

22. Structure according to any one of claims 15 to 21, wherein in combination the two ends (5, 6) associating the energy absorption device (1) with the structure (4) define a direction orientated in such a way so that the forces, which are projected over this direction resulting from a longitudinal deceleration of 16 g with the seat being horizontal, and a vertical deceleration of 14 g when the seat is inclined towards the bottom and towards the front by 30°, are approximately the same, especially a direction forming an angle α with the horizontal of about 37°.

23. Structure according to any one of claims 15 to 22, wherein in combination the rear foot (3) is rigid and dimensioned, especially as regards its thickness, so that it remains almost immobile and unable to become warped in normal use conditions but warps plastically, especially on bending as regards a reduction of its bend, when the deceleration undergone by the seat and its passenger(s) exceeds a specific value corresponding to a situation of an accident and stresses the structure (4) on warping so that this warping of the structure (4) only takes place with a dissipation of the elastic and subsequent plastic warping energy of the rear foot (3).

24. Structure according to claim 23, wherein in combination the rear foot (3) is dimensioned so as to begin to plastically warp, especially on bending as regards the bend reduction from a deceleration undergone by the seat and its passenger which results in a dissipation of energy in the energy absorption device (1), and wherein the front foot (2) and the frame (29), especially the longitudinal girders and/or transverse girders associated with the structure (4), are dimensioned so as to remain rigid or solely elastically deformable within the range of decelerations which do not result in any mechanical rupture inside the structure (4).

25. Structure according to claim 24, wherein in combination the rear foot (3) and the energy absorption device (1) are dimensioned so as to become warped from a deceleration corresponding to a longitudinal deceleration of about 15 g, especially 14 g and 16 g.

26. Structure according to any one of claims 15 to 25, wherein the energy absorption device (1) has its convexity orientated towards the bottom and the rear.

27. Seat of an air transport device, especially an airline passenger seat, wherein it comprises an under frame formed from a structure (4) according to any one of claims 16 to 26.

## Patentansprüche

1. Rahmen (4) als Untergestell eines Sitzes für ein Lufttransportfahrzeug, bestehend aus einer Energieaufnahmevorrichtung (1), die insgesamt länglich und zwischen dem Vorderbein (2) und dem Hinterbein (3) eines Sitzes für ein Lufttransportfahrzeug angebracht ist, wobei die beiden Enden der Energieaufnahmevorrichtung jeweils einem der Beine (2, 3) zugeordnet sind, sodaß im Falle einer Verformung des Rahmens (4) bei Stoßeinwirkung die Energieaufnahmevorrichtung (1) mit mindestens einer Druckkraft in der von einer Geraden (9) angegebenen Richtung belastet wird, die durch die beiden Enden (5, 6) der Energieaufnahmevorrichtung in Richtung Rahmen (4) verläuft, dadurch gekennzeichnet, daß der Rahmen (4) aus einem einteiligen Element (1) gebildet wird, das mindestens einen Abschnitt (12) aufweist, dessen Form so vorgegeben ist, daß das Element (1) nach einer vorgegebenen Verformungsart eine allgemeine, plastische, ihm eigene strukturelle Verformung erfährt und das Element mindestens einen Abschnitt (7) aufweist, der dem Abschnitt (12) gegenüber liegt, der die allgemeine, plastische, ihm eigene strukturelle Verformung erfährt, wobei der gegenüberliegende Abschnitt (7) bei einer bestimmten Druckkraft in Richtung der Geraden (9) eine ihm eigene plastische Verformung durch Knickbiegen erfährt.

2. Rahmen nach Patentanspruch 1, dadurch gekennzeichnet, daß das Element (1) so angeordnet ist, daß es eine allgemeine plastische Verformung durch Biegen erfährt.

3. Rahmen nach Patentanspruch 2, dadurch gekennzeichnet, daß das Element (1) so angeordnet ist, daß es eine allgemeine plastische Verformung durch Knickbiegen erfährt.

4. Rahmen nach Patentanspruch 1 bis 3, dadurch gekennzeichnet, daß das Element (1) einen Teilbereich (8) aufweist, dessen Form vor der Verformung von der Geraden zwischen den beiden Enden (5, 6) abweicht, daß die technischen Daten und die Abmessungen dieses Teilbereichs (8) so ausgelegt sind, daß sich die allgemeine plastische Verformung des Elements (1) in ihm konzentriert und daß er die Abschnitte (7, 12) zur Energieaufnahme durch plastische Verformung besitzt, die bei der Verformung des Elements (1) beim Biegen im Teilbereich (8) unter dem Einwirken der Druckkraft in Richtung der Geraden (9) aktiv sind.

5. Rahmen nach Patentanspruch 4, dadurch gekennzeichnet, daß die Abschnitte (7, 12) zur Energieaufnahme aus dem durch Biegung plastisch verformbaren Teilbereich (8) bestehen.

6. Rahmen nach Patentanspruch 4 und 5, dadurch gekennzeichnet, daß der Teilbereich (8) mindestens weitgehend median angeordnet ist.

7. Rahmen nach Patentanspruch 4 bis 6, dadurch gekennzeichnet, daß das Element (1) so bemessen ist, daß es keine Verformung außerhalb des Teilbereichs (8) erfährt.

8. Rahmen nach Patentanspruch 4 bis 7, dadurch gekennzeichnet, daß der Abschnitt (12) den weniger widerstandsfähigen Teil im Teilbereich (8) des Elements (1) darstellt und sich durch Biegen plastische verformt und somit Energie aufnimmt, wobei die plastische Verformung durch Biegen dieses weniger widerstandsfähigen Abschnitts (12) der allgemeinen Verformung des Elements(1) durch Biegen entspricht.

9. Rahmen nach Patentanspruch 4 bis 8, dadurch gekennzeichnet, daß der gegenüberliegende Abschnitt (7) so angeordnet ist, daß er der allgemeinen Verformung durch Biegen des Elements (1) und des weniger widerstandsfähigen Abschnitts (12) entgegenwirkt.

10. Rahmen nach Patentanspruch 9, dadurch gekennzeichnet, daß der gegenüberliegende Abschnitt (7) aus einer Verstrebung (7) besteht, die der allgemeinen Verformung durch Biegen des Elements (1) und des weniger widerstandsfähigen Abschnitts (12) entgegenwirkt.

11. Rahmen nach Patentanspruch 1 bis 10, dadurch gekennzeichnet, daß das Element überwiegend halbmondförmig ist.

12. Rahmen nach Patentanspruch 1 bis 11, dadurch gekennzeichnet, daß das Element überwiegend eine gekrümmte oder gewinkelte Form aufweist, wobei der Teilbereich (8) den Bereich mit der stärksten Krümmung darstellt.

13. Rahmen nach Patentanspruch 4 bis 12, dadurch gekennzeichnet, daß der Teilbereich (8) aus zwei Abschnitten (7, 12) mit gekrümmten Schenkeln entgegengesetzter Konvexität besteht, die durch einen Freiraum (15) voneinander getrennt sind, wobei die Krümmungen dieser Abschnitte (7, 12) den Verformungen durch Biegen entsprechen und diese bei Schlag- bzw. Stoßeinwirkung erfahren.

14. Rahmen nach Patentanspruch 4 bis 13, dadurch gekennzeichnet, daß der eine (12) der Abschnitte (7, 12) aus gekrümmten Schenkeln des Teilbereichs (8) den Scheitel (16) der größeren Krümmung der konvexen Fläche (13) des Elements (1) bildet und somit seine konvexe Krümmung in dieselbe Richtung weist wie das Element (1) und daß der andere Abschnitt aus gekrümmten Schenkeln teilweise die insgesamt konkave Fläche (14) des Elements (1) bildet, seine konvexe Krümmung jedoch in die entgegengesetzte Richtung weist, sodaß eine Verstrebung gebildet wird, die der allgemeinen Verformung durch Biegen des Elements (1) entgegenwirkt.

15. Rahmen nach Patentanspruch 1 bis 14, insbesondere für einen Passagiersitz in einem Linienflugzeug, der der festen Struktur des Flugzeugs und insbesondere dem Boden zugeordnet und mit mindestens einer vorderen Verankerung (27) des Vorderbeins (2) und mindestens einer hinteren Verankerung (28) des Hinterbeins (3) fest damit verbunden ist, wobei Vorderbein (2) und Hinterbein (3) dem Gerippe (29) des Sitzes zugeordnet sind und das Vorderbein (2) in normaler Stellung mindest weitgehend senkrecht in Bezug auf seine vordere Verankerung unten (27) und insbesondere in Bezug auf den Boden des Flugzeugs ausgerichtet ist, während das Vorderbein (2) und das Hinterbein (3) an ihren jeweiligen oberen Enden schwenkbar mit dem Gerippe (29) des Sitzes verbunden sind, sodaß sie um waagrechte und quer gerichtete Schwenkachsen schwenken können, wobei der Rahmen einerseits die Energieaufnahmevorrichtung (1) besitzt, die dem oberen Teil (30) des Hinterbeins (3) zugeordnet, aber in einer bestimmten Entfernung von dem oberen hinteren Schwenkgelenk (31) und in der Nähe oder direkt an der vorderen unteren Verankerung angeordnet ist, und andererseits Mittel (32) aufweist, die ein Schwenken des Hinterbeins (3) um dessen hintere Verankerung an der festen Struktur des Flugzeugs verhindert.

16. Rahmen nach Patentanspruch 15, in Verbindung mit anderen Ansprüchen dadurch gekennzeichnet, daß das Hinterbein (3) die Form einer Konsole aufweist, deren konvexe Fläche nach vorn weist, sodaß das Hinterbein (3) beim Verformen des Rahmens (4) eine Verformung durch Biegen nach vorn erfährt, wobei die theoretische oder vorgegebene Schwenkachse beim Biegen in einem gegebenen Abstand von der hinteren Verankerung (28) und weitgehend in der Senkrechten der normalen Stellung der Schwenkachse des Hinterbeins (3) in Bezug auf das Gerippe (29) des Sitzes liegt.

17. Rahmen nach Patentanspruch 16, in Verbindung mit anderen Ansprüchen dadurch gekennzeichnet, daß das Hinterbein (3) so ausgebildet ist, daß die theoretische oder vorgegebene Schwenkachse beim Biegen von der festen Struktur des Flugzeugs nach oben verlagert ist.

18. Rahmen nach Patentanspruch 15 bis 17, in Verbindung mit anderen Ansprüchen dadurch gekennzeichnet, daß die vordere Verankerung (27) ein Schwenkgelenk aufweist, mit dem das Vorderbein (2) aus seiner normalen Stellung um eine waagrechte, quer gerichtete Schwenkachse der vorderen Verankerung (27) nach vorn schwenken kann.

19. Rahmen nach Patentanspruch 16 bis 18, in Verbindung mit anderen Ansprüchen dadurch gekennzeichnet, daß die Energieaufnahmevorrichtung (1) dem Oberteil (30) des Hinterbeins (3) über dem Bereich (33) der stärksten Krümmung des Hinterbeins (3) zugeordnet ist.

20. Rahmen nach Patentanspruch 15 bis 19, in Verbindung mit anderen Ansprüchen dadurch gekennzeichnet, daß die Energieaufnahmevorrichtung (1) schwenkbar mit dem Hinterbein (3) verbunden ist, sodaß sie um eine waagrechte, quer gerichtete Schwenkachse schwenken kann.

21. Rahmen nach Patentanspruch 15 bis 20, in Verbindung mit anderen Ansprüchen dadurch gekennzeichnet, daß die Energieaufnahmevorrichtung (1) starr mit dem Bereich in der Nähe der vorderen Verankerung (27) oder direkt mit dieser verbunden ist, sodaß sie nicht um eine waagrechte, quer gerichtete Schwenkachse schwenken kann.

22. Rahmen nach Patentanspruch 15 bis 21, in Verbindung mit anderen Ansprüchen dadurch gekennzeichnet, daß die beiden Enden (5, 6) der Energieaufnahmevorrichtung (1) in Bezug auf den Rahmen (4) eine Richtung angeben, die so ausgerichtet ist, daß die in dieser Richtung einwirkenden Kräfte, die sich aus einer Verzögerung von 16 g in Längsrichtung, der Sitz waagrecht bleibt, und aus einer Verzögerung von 14 g in der Senkrechten, bei der der Sitz um 30° nach vorn unten verlagert wird, ergeben, weitgehend dieselben sind, insbesondere eine Richtung, die einen Winkel α von etwa 37° in Bezug auf die Waagrechte bildet.

23. Rahmen nach Patentanspruch 15 bis 22, in Verbindung mit anderen Ansprüchen dadurch gekennzeichnet, daß das Hinterbein (3) starr und insbesondere seine Stärke so bemessen ist, daß es unter normalen Anwendungsbedingungen praktisch unbeweglich und unverformbar bleibt, sich jedoch plastisch - insbesondere durch Biegen im Sinne einer Verringerung seiner Krümmung - verformt, sobald die Verzögerung, die auf den Sitz bzw. seine(n) Passagier(e) einwirkt, einen bestimmten Wert überschreitet, der einer Unfallsituation entspricht, und den Rahmen (4) durch Verformung derart beansprucht, daß die Verformung des Rahmens (4) nur unter Energieaufnahme in Form von elastischer und anschließend plastischer Verformung des Hinterbeins (3) erfolgt.

24. Rahmen nach Patentanspruch 23, in Verbindung mit anderen Ansprüchen dadurch gekennzeichnet, daß das Hinterbein (3) sich plastisch - insbesondere durch Biegen im Sinne einer Verringerung seiner Krümmung- zu verformen, sobald die Verzögerung, die auf den Sitz bzw. seinen Passagier einwirkt, eine Energieaufnahme durch die Energieaufnahmevorrichtung (1) bewirkt, und daß das Vorderbein (2) und das Gerippe (29) - insbesondere die Längsträger bzw. die Querträger, mit denen der Rahmen (4) verbunden ist - so bemessen sind, daß sie starr bleiben und sich lediglich elastisch verformen, solange die Verzögerung nicht so groß ist, daß sie den mechanischen Bruch des Rahmens (4) bewirkt.

25. Rahmen nach Patentanspruch 24, in Verbindung mit anderen Ansprüchen dadurch gekennzeichnet, daß das Hinterbein (3) und die Energieaufnahmevorrichtung (1) so bemessen sind, daß sie sich von einer Verzögerung an verformen, deren Wert in Längsrichtung 15 g, insbesondere 14 g und 16 g beträgt.

26. Rahmen nach Patentanspruch 15 bis 25, in Verbindung mit anderen Ansprüchen dadurch gekennzeichnet, daß die konvexe Fläche der Energieaufnahmevorrichtung (1) nach hinten und nach unten weist.

27. Sitz für ein Lufttransportfahrzeug, insbesondere Passagiersitz für ein Linienflugzeug, dadurch gekennzeichnet, daß er ein Untergestell in Form eines Rahmens (4) nach einem der Patentansprüche 15 bis 26 besitzt.
